(19) Europäisches Patentamt

European Patent Office

Office européen des brevets

(11) Veröffentlichungsnummer: **0 218 831 B1**

(12) **EUROPÄISCHE PATENTSCHRIFT**

(45) Veröffentlichungstag der Patentschrift: **16.10.91**

(21) Anmeldenummer: **86110856.1**

(22) Anmeldetag: **06.08.86**

(51) Int. Cl.⁵: **F16H 21/52**, F16H 21/40, B27B 19/00

(54) Antrieb für ein oszillierendes Werkzeug.

(30) Priorität: **18.10.85 DE 8529622 U**

(43) Veröffentlichungstag der Anmeldung:
**22.04.87 Patentblatt 87/17**

(45) Bekanntmachung des Hinweises auf die
Patenterteilung:
**16.10.91 Patentblatt 91/42**

(84) Benannte Vertragsstaaten:
**AT BE CH DE FR GB IT LI NL SE**

(56) Entgegenhaltungen:
**DE-U- 8 031 084**
**US-A- 3 505 733**
**US-A- 4 173 069**
**US-A- 4 215 475**

(73) Patentinhaber: **Chicago Pneumatic Tool GmbH**
**Hagenauerstrasse 27**
**W-6200 Wiesbaden(DE)**

(72) Erfinder: **Wittek, Winfried D.**
**Schöne Aussicht 25**
**W-6229 Walluf(DE)**

(74) Vertreter: **Weber, Dieter, Dr. et al**
**Dr. Dieter Weber und Dipl.-Phys. Klaus Seiffert Patentanwälte Gustav-Freytag-Strasse 25 Postfach 6145**
**W-6200 Wiesbaden 1(DE)**

Rank Xerox (UK) Business Services

## Beschreibung

Die Erfindung betrifft einen Antrieb für ein oszillierendes Werkzeug mit einer rotierenden Exzenterspindel, einem exzentrischen Zapfen am Abtriebsende der Exzenterspiegel, einer Antriebsgabel, welche antriebsseitig kraftschlüssig ein von dem Zapfen mitgeführtes Kugellager als Kraftübertragungselement umfaßt und welche abtriebsseitig schwenkbar gelagert und mit einem Werkzeugträger verbunden ist, wobei das Übertragungselement ein Kugellager ist, dessen äußerer Ring eine zylindrische Außenfläche hat, die Achse des Kugellagers im wesentlichen parallel zur Achse der Exzenterspindel verläuft und das Kugellager formschlüssig auf dem Zapfen aufsitzt und mit Spielpassung mit seinem ganzen Durchmesser in der Klaue der Antriebsgabel liegt.

Ein derartiges Werkzeug ist aus der US-A-4,215,475 bekannt.

Bei diesem Antrieb verläuft jedoch die Schwenkachse der Antriebsgabel parallel zur Achse der Exzenterspindel. Dies ist bei einigen Anwendungsfällen unerwünscht. Außerdem müssen dabei die Arme der Antriebsgabel deutlich länger sein als der Radius des Kugellagers, damit dieses immer mit seinem größten Durchmesser zwischen den Gabelenden geführt ist. Die Gabelenden sind entsprechend schwach und bruchgefährdet oder müssen entsprechend massiv gestaltet werden, was jedoch in nachteiliger Weise die Masse der Gabel beträchtlich erhöht. Beides führt zu einer unerwünscht starken Begrenzung der maximal möglichen Schwingungszahl. Es ist weiterhin ein Werkzeug bekannt, bei welchem auf dem exzentrischen Zapfen ein im wesentlichen zylindrischer Kolben drehbar gelagert ist, dessen Symmetrieachse in einer Ebene senkrecht zur Achse der Exzenterspindel verläuft, und welcher zu mehr als der Hälfte des Umfanges formschlüssig von einer Gabelklaue umfaßt wird, in welcher der Kolben parallel zu seiner Symmetrieachse auf- und abbewegt wird, wenn die Exzenterspindel rotiert und dabei den auf dem exzentrisch angebrachten Zapfen der Exzenterspindel drehbar gelagerten Kolben mitnimmt. Dabei wird der Kolben zwangsweise auch senkrecht zu seiner Symmetrieachse bewegt, wobei ausschließlich die Bewegung senkrecht zu seiner Symmetrieachse schließlich auf die Antriebsgabel übertragen wird, während der Kolben parallel zu seiner Symmetrieachse frei in der ihn formschlüssig umgreifenden Antriebsgabel beweglich ist.

Um ein Verkippen des Kolbens in der Antriebsgabel zu verhindern, welches zu erhöhten Reibungsverlusten führen würde und unter Umständen auch ein Blockieren des Antriebs verursachen könnte, muß der Kolben eine ausreichende Länge aufweisen, ebenso wie der als Führungszylinder wirkende Klauenteil der Gabel, wobei das entsprechende Gabelmaß parallel zur Kolbenachse im Folgenden als Dicke der Gabel bzw. der Gabelklaue definiert ist.

Die Antriebsgabel ist an ihrem der Klaue gegenüberliegenden Ende drehbar gelagert und mit einem Werkzeugträger verbunden, welcher im allgemeinen aus einer konzentrisch zur Schwenkachse der Gabel an dieser zu befestigenden Spindel besteht, die darüberhinaus mit geeigneten Befestigungselementen versehen ist, an denen ein oszillierendes Werkzeug, z.B. ein Schneidmesser, befestigt werden kann.

Die Ausführung des Kraftübertragungselementes als vergleichsweise langer Kolben mit einer entsprechend hohen teilzylindrischen Gabelklaue als Führung bringt es in nachteiliger Weise mit sich, daß die exzentrisch bewegten und die oszillierenden Teile des Antriebes eine relativ große Masse haben, so daß die bei der schnellen Rotation der Exzenterspindel periodisch wirksamen und relativ großen Zentrifugalkräfte zu starken Vibrationen des Antriebes und des ganzen Gerätes führen, die nur mit aufwendigen Auswuchtelementen mehr oder weniger unterdrückt werden können. Außerdem treten wegen der großen Masse des Kolbens und der Gabel bzw. der Gabelklaue auch relativ große Kräfte bei der Kraftübertragung zwischen diesen beiden Teilen auf, so daß sie aus entsprechend hartem, widerstandsfähigem und entsprechend schwer zu bearbeitendem Material bestehen müssen.

Aus der US-A-4,173,069 ist ein oszillierender Antrieb für einen Knabber- bzw. Schneidaufsatz bekannt. Auch dieser ist nur für relativ niedrige Dreh- bzw. Schwingungszahlen vorgesehen und geeignet, da wegen der balligen Ausführung der Außenfläche des Exzenters immer nur eine punktförmige Berührung zwischen Gabelklaue und Exzenterfläche stattfindet.

Der Erfindung liegt gegenüber dem vorgenannten Stand der Technik die Aufgabe zugrunde, unter Verwendung konventioneller Materialien einen oszillierenden Werkzeugantrieb der eingangs genannten Art zu schaffen, welcher bei im wesentlichen gleicher Werkzeugleistung kleiner, leichter und einfacher aufgebaut ist als die bisher bekannten Geräte dieser Art und damit ein vibrationsarmes Arbeiten bei hohen Drehzahlen ermöglicht.

Diese Aufgabe wird dadurch gelöst, daß die Schwenkachse der Antriebsgabel in einer Ebene senkrecht zur Achse der Exzenterspindel verläuft und daß die gegenüberliegenden Innenseiten der Gabelklaue in der Draufsicht zur Gabelöffnung hin konisch aufeinanderzulaufen, wobei der Konuswinkel ($\alpha$), gemessen von der Mittelachse der im wesentlichen symmetrischen Gabel so bemessen ist, daß der Außenring des Kugellagers bei den Endausschlägen der schwingenden Gabelklaue linienförmig an den Innenflächen der Klaue anliegt.

Ein derartiger Werkzeugantrieb erfüllt die gleichen Funktionen wie der eingangs beschriebene Mechanismus, bei welchem ein senkrecht zu seiner Symmetrieachse drehbar gelagerter Kolben in einer als Führungszylinder ausgebildeten Klaue der Antriebsgabel läuft, ohne jedoch eine entsprechend große träge Masse aufweisen zu müssen.

Im Gegensatz zu dem Kolben des bekannten Antriebes wird das Kugellager durch den Exzenterzapfen senkrecht zu seiner Achse bewegt, wobei die Innenflächen der Gabelklaue, welche als Führungsflächen für den Außenring des Kugellagers dienen, auch nicht mehr als Hohlzylinderflächen ausgebildet sind, sondern im wesentlichen als ebene Flächen ausgebildet sein können. Da die Achse des Kugellagers parallel zur Achse der rotierenden Exzenterspindel verläuft, ist die Übertragung der Drehbewegung der Exzenterspindel auf die Antriebsgabel praktisch ausgeschlossen, so daß die als Führungsflächen dienenden Innenflächen der Gabelklaue zur Führung des Außenringes des Kugellagers nur eine sehr geringe Höhe haben müssen. Da somit auch die Gabelklaue und der Gabelschaft nur eine sehr geringe Dicke zu haben brauchen, weisen sie auch eine entsprechend kleine träge Masse auf.

Die der Dicke der Gabelklaue entsprechende Höhe der Innenflächen der Gabelklaue muß lediglich mindestens so groß sein wie der Hubweg des exzentrisch angebrachten Kugellagers, entspricht also gerade der zweifachen Exzentrizität.

Die Exzentrizität ist hierbei definiert als der Abstand der Achse des Kugellagers von der Achse der Exzenterspindel.

Bei der konkreten Ausführung der entsprechenden Bauteile sind jedoch auch gewisse Fertigungstoleranzen zu berücksichtigen, so daß im Zweifelsfall die Dicke der Gabelklaue und ihrer Führungsflächen etwas oberhalb des minimal erforderlichen Wertes liegt.

Neuerungsgemäß ist dabei vorgesehen, daß die Schwenkachse der Antriebsgabel in einer Ebene senkrecht zur Achse der Exzenterspindel verläuft.

Die Schwenkachse der Antriebsgabel ist im allgemeinen auch gleichzeitig die Schwenkachse des oszillierenden Werkzeuges, welches auf diese Weise um eine Achse schwenkt, welche nicht nur senkrecht zu der Achse der Exzenterspindel verläuft sondern damit gleichzeitig auch senkrecht zur Achse eines die Exzenterspindel im wesentlichen zylindrisch umgebenden Werkzeuggehäuses, welches auch als Handgriff dient.

Dadurch, daß bei den Emdausschlägen die Berührung zwischen dem Außenring des Kugellagers und den Innenflächen der Gabelklaue linienförmig erfolgt, wird der Verschleiß der einander berührenden Teile herabgesetzt.

Weiterhin ist vorgesehen, daß der Konuswinkel $\alpha$ , gemessen von der Mittelachse der im wesentlichen symmetrischen Gabel, sich errechnet gemäß

$$\arctan \frac{b+h}{l} - \arctan \frac{b}{l} ,$$

wobei l die Länge der Gabel, gemessen von der Schwenkachse bis zur Fluchtlinie der Gabelklauenenden, h der einseitige Hub und b die halbe Breite der Gabelklauenöffnung an ihrer engsten Stelle ist, die gleichzeitig dem Außendurchmesser des Kugellagers entspricht.

Durch diese Wahl des Konuswinkels $\alpha$ erreicht man, daß der Außenring des Kugellagers gerade bei den Endausschlägen der schwingenden Gabelklaue flach an den Innenflächen der Klaue anliegt.

Bei dem neuerungsgemäß hergestellten oszillierenden Antrieb hat das Kugellager in der Gabelklaue an deren engster Stelle ein Spiel von etwa 0,01 mm.

Zusammen mit der konisch zulaufenden Form der Innenflächen der Gabelklaue wird durch eine derartige Spielpassung ein Verklemmen des Kugellageraußenringes in der Gabelklaue in allen möglichen Bewegungszuständen des oszillierenden Antriebes verhindert.

Weiterhin sieht die Neuerung vor, daß die Exzentrizität des Zapfens weniger als 2 mm, vorzugsweise weniger als 1 mm beträgt. Da der Innenring des Kugellagers auf dem Zapfen verankert ist, ist die Exzentrizität des Zapfens die gleiche wie die des Kugellagers und bestimmt damit den Hubweg des Kugellagers in der Gabelklaue. Dieser Hubweg soll einerseits nicht zu klein sein, damit auch das oszillierende Werkzeug einen ausreichenden Schwingungsweg zurücklegt, ohne daß die Verhältnisse der Hebel, welche im wesentlichen gegeben sind durch die Länge der Gabel und durch den Abstand des eigentlichen Werkzeugelementes von der Schwenkachse, wesentlich verändert werden müssen. Anderer-

3

seits jedoch soll der Hubweg auch nicht zu groß sein, da sich ansonsten die Massenträgheit der exzentrisch bewegten Teile durch entsprechende Vibrationen allzuleicht bemerklich macht und da weiterhin, wie bereits ausgeführt, auch die Dicke der Antriebsgabel, welche erfindungsgemäß möglichst klein gehalten wird, von diesem Hub abhängt.

Neuerungsgemäß ist weiterhin vorgesehen, daß die Länge der Gabel, gemessen von der Schwenkachse bis zur Fluchtlinie der Klauenenden, weniger als 50 mm, vorzugsweise 38 mm beträgt.

Bei der Wahl der Gabellänge und des Hubes ist von üblichen, auf dem Markt befindlichen oszillierenden Werkzeugen wie z.B. Schneidmessern auszugehen, für deren Leistung (Schnittleistung) ein bestimmter Schwenkwinkel und eine bestimmte Schwenkgeschwindigkeit optimal sind, wobei der Schwenkwinkel ausschließlich vom Verhältnis des Exzenterhubes zur Gabellänge abhängt.

Unter Berücksichtigung fertigungs- und einbautechnischer Toleranzen beträgt die Dicke der Gabelklaue und des Gabelschaftes gemäß der Neuerung weniger als 10, vorzugsweise 7 mm.

Auf diese Weise läßt sich die Masse der Gabel gegenüber bekannten Geräten drastisch reduzieren.

Weiterhin ist der neuerungsgemäße Antrieb dadurch gekennzeichnet, daß der Außendurchmesser des Kugellagers und der minimale Klauenabstand der Antriebsgabel weniger als 25 mm, vorzugsweise 19 mm betragen.

Hierbei ist jedoch zwischen Kugellager und Klaueninnenflächen ein gewisses minimales Spiel zu berücksichtigen.

Der erfindungsgemäße Antrieb ist, bei im wesentlichen gleicher Leistung, erheblich kleiner und leichter als entsprechende bisher bekannte oszillierende Antriebe.

Als Antriebsmotor ist ein pneumatischer Motor vorgesehen, welcher ebenfalls nur eine sehr geringe Baugröße aufweist.

Weitere Vorteile, Merkmale und Anwendungsmöglichkeiten der vorliegenden Neuerung werden deutlich anhand der folgenden Beschreibung einer bevorzugten Ausführungsform und der dazugehörigen Figuren. Es zeigen:

Figur 1 eine perspektivische Darstellung der neuerungsgemäßen Antriebsteile,

Figur 2 ebenfalls eine perspektivische Darstellung der neuerungsgemäßen Antriebsteile aus einem gegenüber der Figur 1 um etwa 90° veränderten Blickwinkel,

Figur 3 eine Explosionsdarstellung der für den Antrieb wesentlichen Teile,

Figur 4 eine Ansicht der Antriebsgabel von oben und

Figur 5 eine Ansicht der Antriebsgabel von der Seite.

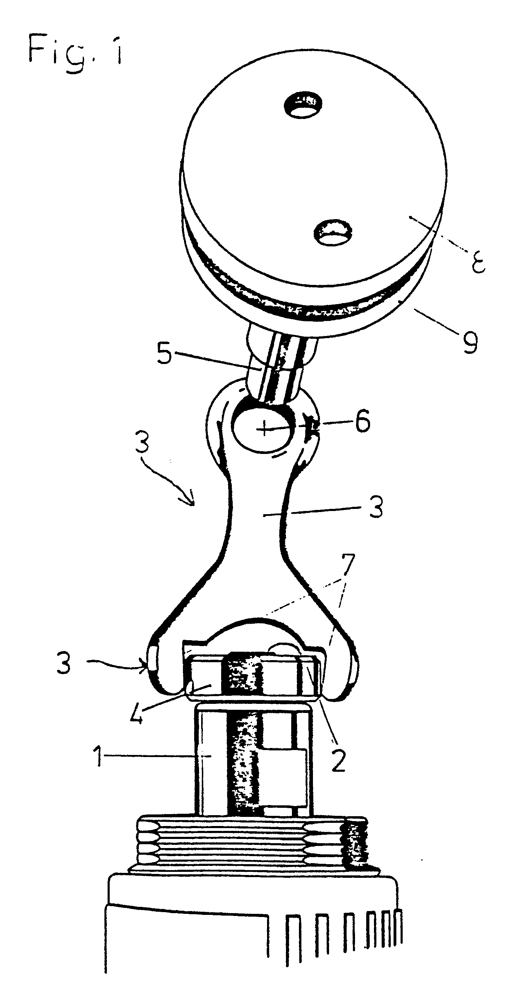

In Figur 1 erkennt man die Gabel 3 in der Draufsicht. Die Gabel 3 besteht im wesentlichen aus der Klaue 3a und dem Schaft 3b und ist um die Schwenkachse 6 schwenkbar gelagert. In dieser Ansicht sind die schräg nach innen geneigten Innenflächen 7 der Gabelklaue 3a, welche den Außenring des Kugellagers 4 umfassen, gut zu erkennen. Das Kugellager 4 sitzt mit seinem Innenring auf einem exzentrischen Zapfen 2 der Exzenterspindel 1 auf. In der Darstellung der Figur 1 ist der Zapfen 2 selbst nicht sichtbar und befindet sich offensichtlich in einer Extremposition senkrecht zur Ebene des Bildes,so daß die Exzentrizität des Kugellagers 4 in dieser Darstellung nicht sichtbar ist.

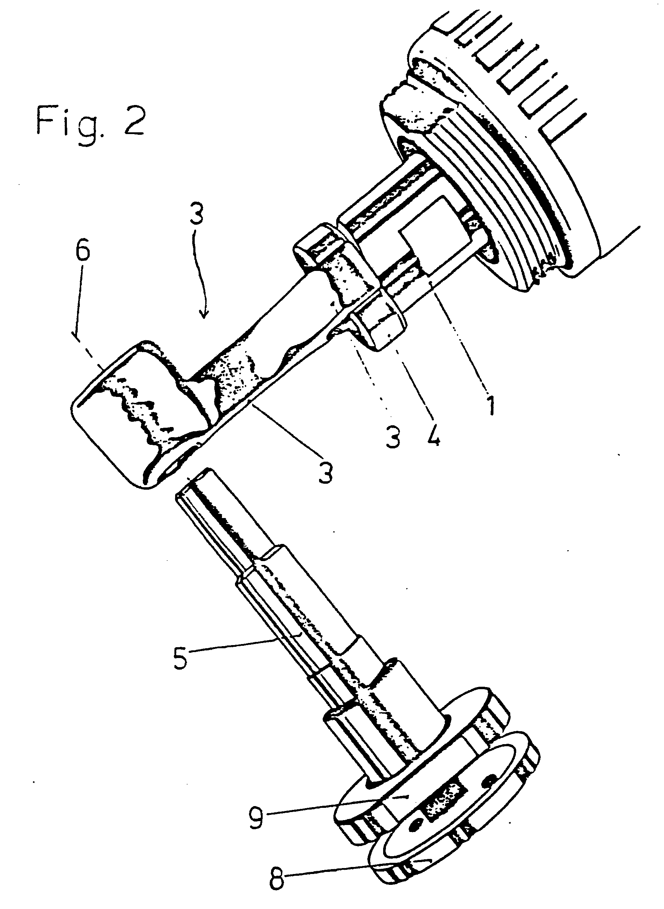

Während der Rotationsbewegung der Exzenterspindel 1 bewegt sich das Kugellager 4 mit seiner Achse auf einem Kreis um die Achse der Exzenterspindel 1. Der Radius dieses Kreises entspricht dem Abstand der Achse des Kugellagers 4 zur Achse der Exzenterspindel 1 und wird kurz als Exzentrizität bezeichnet. Während der Kreisbewegung des Kugellagers 4 in der Ebene senkrecht zur Bildebene gleitet das Kugellager mit der Oberfläche seines Außenringes an den schräg geneigten Innenflächen 7 der Gabelklaue 3a in einer Richtung senkrecht zur Bildebene auf und ab. Gleichzeitig wird dabei auch die Gabel 3 um die Achse 6 in der Bildebene hin- und hergeschwenkt. Der Gesamthub der Gabelklaue 3a entspricht dabei gerade der doppelten Exzentrizität des Kugellagers 4. In Figur 2 ist die Gabel 3 im wesentlichen in einer Seitenansicht zu erkennen. Ebenso erkennt man die Werkzeugspindel 5, welche an einem Ende konzentrisch zur Schwenkachse 6 fest mit der Antriebsgabel 3 verbunden wird. An ihrem anderen Ende trägt die Werkzeugspindel 5 eine Scheibe 8, welche mit einem konzentrischen Gewindezapfen in die Spindel 5 einschraubbar ist und ein auf ihr liegendes Werkzeug fest gegen einen Konterring 9 preßt. Auf diese Weise wird eine feste und sichere Verbindung zwischen dem oszillierenden Werkzeug und der Werkzeugspindel 5 hergestellt.

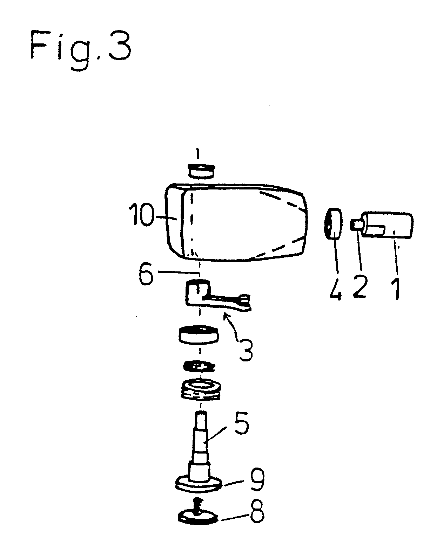

In der Explosionsdarstellung der Figur 3 erkennt man nochmals alle wesentlichen Teile des oszillierenden Antriebs. Die Exzenterspindel 1 trägt einen exzentrisch auf ihr angebrachten Zapfen 2, auf welchen das Kugellager 4 mit Passung aufgesetzt wird. Die genannten Teile befinden sich in einem Gehäusekopf 10, in welchem die Antriebsgabel 3 um die Achse 6 schwenkbar gelagert ist. Die Antriebsgabel 3 ist wiederum mit der Werkzeugspindel 5 fest verbunden, welche an ihrem Ende eine Halterung für Werkzeuge aufweist, die über die Antriebsgabel und die Spindel in oszillierende Bewegung versetzt werden sollen.

In fertig montiertem Zustand umgreift die Gabelklaue 3a das Kugellager 4 derart, daß es sich in allen Bewegungszuständen mit seinem ganzen Durchmesser zwischen den gegenüberliegenden Innenflächen 7 der Gabelklaue 3a befindet.

Beim Betrieb des oszillierenden Werkzeugantriebes rotiert die Exzenterspindel mit bis zu 23.000 Umdrehungen pro Minute und nimmt dabei das auf dem Zapfen 2 exzentrisch angebrachte Kugellager 4 mit. Die exzentrische Rotationsbewegung des Kugellagers 4 wird durch die Verbindung mit der Gabelklaue 3a in eine horizontale Schwenkbewegung umgesetzt, da nur die Komponente der Rotationsbewegung des Kugellagers 4 auf die Gabel 3 bzw. die Gabelklaue 3a übertragen wird, welche in einer Ebene senkrecht zur Schwenkachse 6 liegt, während die Bewegungskomponente des Kugellagers 4 parallel zur Schwenkachse 6 nicht auf die Gabel übertragen werden kann, da das Kugellager 4 in dieser Richtung zwischen den in Ebenen parallel zur Schwenkachse 6 verlaufenden Innenflächen 7 frei beweglich ist.

Mit Ausnahme der Antriebsgabel 3 besteht der Antrieb aus leicht herzustellenden und teilweise marktüblichen Bauelementen.

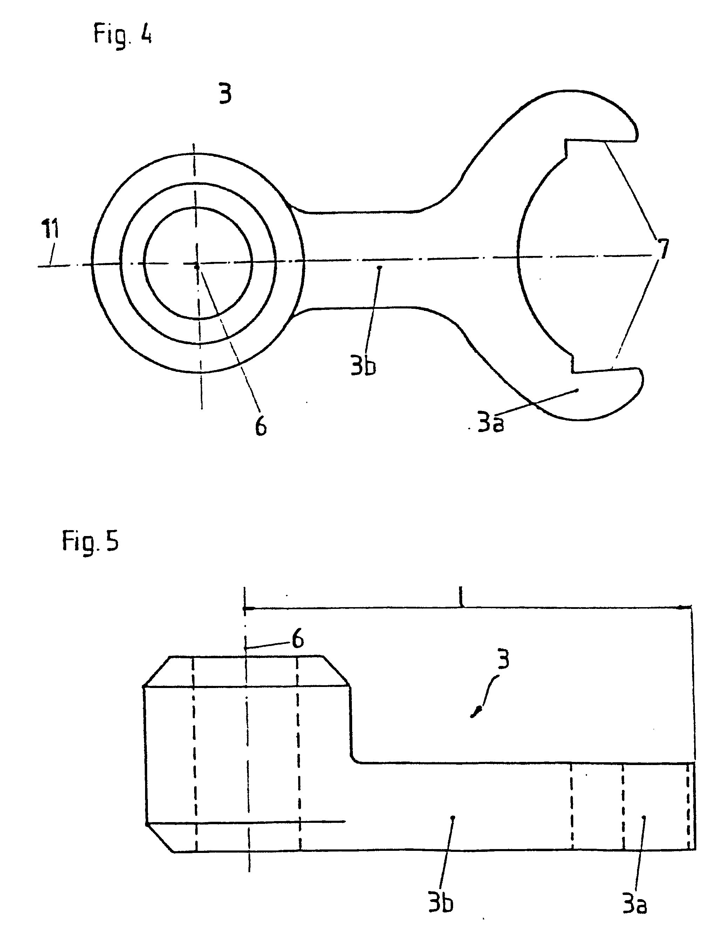

Die Figuren 4 und 5 zeigen eine Ausführungsform der neuerungsgemäßen Antriebsgabel 3 im Detail. Insbesondere erkennt man in der Figur 4, welche die Antriebsgabel 3 in der Draufsicht zeigt, die leichte Neigung der Innenflächen 7 der Gabelklaue 3a. Die Neigung der Innenflächen ist symmetrisch bezüglich der Symmetrieebene 11 der Gabel 3.

In der bevorzugten Ausführungsform hat die Gabel eine Länge 1 von 38 mm, der minimale Abstand 2b der Innenflächen 7 der Gabelklaue 3a beträgt 19,01 mm, der Durchmesser des Kugellagers ist 19 mm und sein einseitiger Hub 0,875 mm. Danach errechnet man den Neigungswinkel

$$\alpha = \arctan \frac{b+h}{1} - \arctan \frac{b}{1} \, ,$$

für welchen sich mit den eben genannten Zahlen ein Wert von $\alpha = 1° \, 14' \, (1,24°)$ ergibt.

Figur 5 zeigt die Gabel 3 in der Seitenansicht. Der Gabelschaf 3b und die Gabelklaue 3a weisen nur eine vergleichsweise geringe Dicke von etwa 7 mm auf, wodurch eine ausreichende Festigkeit der Gabel erreicht wird.

Neuerungsgemäß ergibt sich damit, daß alle exzentrisch bewegten und/oder oszillierenden Teile (d.h. Zapfen 2, Kugellager 4, Gabelschaft 3b und Gabelklaue 3a) nur eine geringe Baugröße und Masse aufweisen, so daß praktisch keine störenden Unwuchtvibrationen an dem gesamten Handwerkzeug auftreten.

Der Antriebskopf, in welchem die neuerungsgemäßen Antriebsteile untergebracht sind, ist mit einem Handgriff verbunden, in welchem sich vorzugsweise ein pneumatischer Antriebsmotor befindet. Das gesamte Gerät ist bei einer Leistungsabgabe von ca. 370 Watt nur wenig größer und schwerer als eine elektrische Zahnbürste und kann daher leicht mit einer Hand gehalten und geführt werden. Dabei ist für viele Anwendungsbereiche, z.B. Schneidmesser, eine Leistung von 200 W bis max. 250 W völlig ausreichend.

**Patentansprüche**

1. Antrieb für ein oszillierendes Werkzeug, mit einer rotierenden Exzenterspindel (1), einem exzentrischen Zapfen (2) am Abtriebsende der Exzenterspindel (1), einer Antriebsgabel (3), welche antriebsseitig kraftschlüssig ein von dem Zapfen (2) mitgeführtes Kugellager (4) als Kraftübertragungselement umfaßt und welche abtriebsseitig schwenkbar gelagert und mit einem Werkzeugträger (5) verbunden ist, wobei der Außenring des Kugellagers (4) eine im wesentlichen zylindrische Außenfläche hat, die Achse des Kugellagers im wesentlichen parallel zur Achse der Exzenterspindel (1) verläuft und das Kugellager formschlüssig auf dem Zapfen (2) aufsitzt und mit Spielpassung mit seinem ganzen Durchmesser in der Klaue (3a) der Antriebsgabel (3) liegt, dadurch gekennzeichnet, daß die Schwenkachse (6) der Antriebsgabel (3) in einer Ebene senkrecht zur Achse der Exzenterspindel (1) verläuft und daß die gegenüberliegenden Innenseiten der Gabelklaue (3a) in der Draufsicht zur Gabelöffnung hin konisch aufeinanderzulaufen, wobei der Konuswinkel ($\alpha$), gemessen von der Mittelachse der im wesentlichen symmetrischen Gabel (3) so bemessen ist, daß der Außenring des Kugellagers bei den Endausschlägen der schwingenden Gabelklaue linienförmig an den Innenflächen der Klaue anliegt.

2. Antrieb nach Anspruch 1, dadurch gekennzeichnet, daß der Konuswinkel (α), gemessen von der Mittelachse der im wesentlichen symmetrischen Gabel (3) sich errechnet gemäß

$$\arctan \frac{b + h}{l} - \arctan \frac{b}{l}$$

wobei l die Länge der Gabel, gemessen von der Schwenkachse bis zur Fluchtlinie der Klauenenden, h der einseitige Exzenterhub und b die halbe Breite der Gabelklauenöffnung an ihrer engsten Stelle ist, die gleichzeitig dem Außendurchmesser des Kugellagers (4) entspricht.

3. Antrieb nach einem der Ansprüche 1 oder 2, dadurch gekennzeichnet, daß das Kugellager (4) in der Gabelklaue (3a) an deren engster Stelle ein Spiel von 0,01 mm hat.

4. Antrieb nach einem oder mehreren der Ansprüche 1 bis 3, dadurch gekennzeichnet, daß die Exzentrizität des Zapfens weniger als 2 mm, vorzugsweise weniger als 1 mm beträgt.

5. Antrieb nach einem oder mehreren der Ansprüche 1 bis 4, dadurch gekennzeichnet, daß die Länge (l) der Gabel (3), gemessen von der Schwenkachse (6) bis zur Fluchtlinie der Klauenenden weniger als 50 mm, vorzugsweise 38 mm beträgt.

6. Antrieb nach einem oder mehreren der Ansprüche 1 bis 5, dadurch gekennzeichnet, daß die Dicke der Gabelklaue (3a) und des Gabelschaftes (3b) weniger als 10, vorzugsweise 7 mm beträgt.

7. Antrieb nach einem oder mehreren der Ansprüche 1 bis 6, dadurch gekennzeichnet, daß der Außendurchmesser des Kugellagers (4) und der minimale Abstand der Innenflächen (7) der Gabelklaue (3a) weniger als 25 mm, vorzugsweise 19 mm betragen.

## Claims

1. A drive means for an oscillating tool, having a rotating eccentric spindle (1), an eccentric pin (2) at the output end of the eccentric spindle (1), a drive fork (3) embracing in force-locking manner at the output end a ball bearing (4) in the form of a power transmission element, and entrained by the pin (2), and which is pivotably mounted at the output side and is connected to a tool carrier (5), wherein the outer ring of the ball bearing (4) has a substantially cylindrical outer surface, the axis of the ball bearing extends substantially parallel to the axis of the eccentric spindle (1) and the ball bearing sits, in form-locking manner, on the pin (2), and the entire diameter of the ball bearing rests with clearance fit in the claw (3a) of the drive fork (3), characterised in that the axis of rotation (6) of the drive fork (3) extends in a plane vertical to the axis of the eccentric spindle (1), and that the oppositely disposed inner sides of the fork claw (3a) extend conically up to the fork opening, in the plan view, wherein the cone angle (α), as measured from the central axis of the substantially symmetrical fork (3) is of a size such that the outer ring of the ball bearing rests on the inner surfaces of the claw at full deflection of the swinging fork claw.

2. A drive means according to Claim 1, characterised in that the cone angle (α), measured from the central axis of the substantially symmetrical fork (3) is calculated according to

$$\arctan \frac{b + h}{l} - \arctan \frac{b}{l}$$

wherein l is the length of the fork, measured from the axis of rotation to the straight line of the ends of the claws, h is the eccentric stroke movement on one side, and b is half the width of the fork claw opening at its narrowest place, which at the same time is equal to the outer diameter of the ball bearing (4).

3. A drive means according to one of Claims 1 or 2, characterised in that the ball bearing (4) has a play of 0.01 mm in the fork claw (3a) at its narrowest place.

4. A drive means according to one or more of Claims 1 to 3, characterised in that the eccentricity of the pin is less than 2 mm, preferably less than 1 mm.

5. A drive means according to one or more of Claims 1 to 4, characterised in that the length (l) of the fork (3), measured from the axis of rotation (6) to the straight line of the claw ends is less than 50 mm, preferably 38 mm.

6. A drive means according to one or more of Claims 1 to 5, characterised in that the fork claw (3a) and the fork shaft (3b) are less than 10, preferably 7 mm in thickness.

7. A drive means according to one or more of Claims 1 to 6, characterised in that the outer diameter of the ball bearing (4) and the minimum distance between the inner surfaces (7) of the fork claw (3a) is less than 25 mm, preferably 19 mm.

**Revendications**

1. Organe d'entraînement d'un outil oscillant, comportant une broche excentrique (1), un tourillon excentrique (2) disposé à l'extrémité de sortie de la broche excentrique (1), une fourche d'entraînement (3), qui, côté entraînement et par liaison dynamique, entoure un roulement à billes (4), entraîné par le tourillon (2) et servant d'élément de transfert de force, et qui, côté sortie, est logé en pivotement et est relié à un porteoutils (5), le chemin extérieur du roulement à billes (4) comportant une surface extérieure essentiellement cylindrique, l'axe du roulement à billes étant essentiellement parallèle à l'axe de la broche excentrique (1) et le roulement à billes étant logé en liaison avec correspondance de forme sur le tourillon (2) et s'appuyant, par ajustement avec jeu, et par la totalité de son diamètre, dans le mors (3a) de la fourche d'entraînement (3), caractérisé en ce que l'axe de pivotement (6) de la fourche d'entraînement (3) se déplace dans un plan perpendiculaire à l'axe de la broche excentrique (1), et que les côtés intérieurs opposés du mors de fourche (3a), en vue de dessus, se rapprochent d'une manière conique de l'ouverture de la fourche, l'angle de conicité ($\alpha$), mesuré à partir de l'axe central de la fourche (3) essentiellement symétrique, étant défini de telle sorte que le chemin extérieur du roulement à billes, quand le mors de fourche pivotant se trouve en déviation extrême, s'appuie d'une manière linéaire contre les surfaces intérieures des mors.

2. Organe d'entraînement selon la revendication 1, caractérisé en ce que l'angle de conicité (a), mesuré à partir de l'axe central de la fourche (3) essentiellement symétrique, se calcule par l'équation suivante : Arctg (b + h/l) - Arctg (b/l) où l est la longueur de la fourche, mesurée entre l'axe de pivotement et la ligne de fuite des extrémités des mors, h est la course excentrique dans une direction et b la moitié de la largeur de l'ouverture des mors de fourche en leur point le plus rapproché, qui aussi correspond au diamètre extérieur du roulement à billes (4).

3. Organe d'entraînement selon l'une des revendications 1 ou 2, caractérisé en ce que le roulement à billes (4) présente, dans les mors de fourche (3a), en leur point le plus rapproché, un jeu de 0,01 mm.

4. Organe d'entraînement selon l'une ou plusieurs des revendications 1 à 3, caractérisé en ce que l'excentricité du tourillon est inférieure à 2 mm et de préférence inférieure à 1 mm.

5. Organe d'entraînement selon l'une ou plusieurs des revendications 1 à 4, caractérisé en ce que la longueur (l) de la fourche (3),mesurée entre l'axe de pivotement (6) et la ligne de fuite des extrémités des mors, est inférieure à 50 mm et est de préférence de 38 mm.

6. Organe d'entraînement selon l'une ou plusieurs des revendications 1 à 5, caractérisé en ce que l'épaisseur des mors de fourche (3a) et de la tige de fourche (3b) est inférieure à 10 mm, et est de préférence de 7

7. Organe d'entraînement selon l'une ou plusieurs des revendications 1 à 6, caractérisé en ce que le diamètre extérieur du roulement à billes (4) et la distance minimale des surfaces intérieures (7) des mors de fourche (3a) sont inférieurs à 25 mm et sont de préférence de 19 mm.

Fig. 1

Fig. 2

# Fig.3

Fig. 4

Fig. 5